# EUROPÄISCHE PATENTSCHRIFT

(11) **EP 0 986 466 B1**
(45) Veröffentlichungstag und Bekanntmachung des Hinweises auf die Patenterteilung: **05.12.2001**
(21) Anmeldenummer: 98934802.4
(22) Anmeldetag: 27.05.1998
(51) Int. Cl.: B41C 1/045, H04N 1/407

(54) **VERFAHREN ZUR ERZEUGUNG UND AUSWERTUNG EINES PROBESCHNITTS**
METHOD FOR MAKING AND EVALUATING A SAMPLE CUT
PROCEDE POUR PRODUIRE ET EVALUER UNE DECOUPE D'ECHANTILLON

(30) Priorität: 02.06.1997 DE 19722762
(43) Veröffentlichungstag der Anmeldung: 22.03.2000
(73) Patentinhaber: Heidelberger Druckmaschinen Aktiengesellschaft, 69115 Heidelberg (DE)
(72) Erfinder: WEIDLICH, Ernst-Rudolf, Gottfried, D-24159 Kiel (DE)
(86) Internationale Anmeldenummer: DE9801441
(87) Internationale Veröffentlichungsnummer: WO9855302

(56) Entgegenhaltungen:
- WO-A-94/19900
- WO-A-95/08443
- WO-A-96/26837
- WO-A-96/31349
- WO-A-96/33870
- DE-A- 19 717 990

## Beschreibung

Die Erfindung bezieht sich auf das Gebiet der elektronischen Reproduktionstechnik und betrifft ein Verfahren zur Erzeugung und Auswertung eines Probeschnitts in einer elektronischen Graviermaschine zur Gravur von Druckformen, insbesondere von Druckzylindern, für den Tiefdruck.

In einer elektronischen Graviermaschine bewegt sich ein Gravierorgan mit einem Gravierstichel als Schneidwerkzeug in axialer Richtung an einem rotierenden Druckzylinder entlang. Der von einem Graviersteuersignal gesteuerte Gravierstichel schneidet eine Folge von in einem Gravurraster angeordneten Vertiefungen, Näpfchen genannt, in die Mantelfläche des Druckzylinders. Das Graviersteuersignal wird in einem Gravierverstärker durch Überlagerung von Bildsignalwerten, welche die zu gravierenden Tonwerte zwischen "Licht" (Weiß) und "Tiefe" (Schwarz) repräsentiert, mit einem periodischen Rastersignal (Vibration) gebildet. Während das Rastersignal eine vibrierende Hubbewegung des Gravierstichels zur Erzeugung des Gravurrasters bewirkt, bestimmen die Bildsignalwerte die geometrischen Abmessungen der in die Mantelfläche des Druckzylinders gravierten Näpfchen.

Damit die bei der Gravur der Druckform gravierten Näpfchen den durch die Bildsignalwerte vorgegebenen Tonwerten entsprechen, muß das Graviersteuersignal kalibriert werden. Dazu werden vor der Gravur der Druckform durch einen sogenannten Probeschnitt für vorgegebene Tonwerte Probenäpfchen graviert, beispielsweise für die Tonwerte "Licht" und "Tiefe". Nach der Probeschnitt werden die geometrischen Istabmessungen der gravierten Probenäpfchen ermittelt und mit den geometrischen Sollabmessungen derjenigen Näpfchen verglichen, welche die für die Probegravur vorgegebenen Tonwerte repräsentieren. Aus dem Vergleich der geometrischen Abmessungen werden Einstellwerte beispielsweise für die Parameter "Licht", "Tiefe", und "Vibration" gewonnen, mit denen der Gravierverstärker derart kalibriert wird, daß die bei der späteren Gravur tatsächlich erzeugten Näpfchen den für eine tonwertrichtige Gravur erforderlichen Näpfchen entsprechen.

Nach dem Probeschnitt müssen die geometrischen Istabmessungen der gravierten Probenäpfchen, beispielsweise die Querdiagonalen, die Längsdiagonalen, die Breiten des Durchstichs und die Stegbreiten ermittelt werden.

Die Ermittlung der geometrischen Istabmessungen der gravierten Probenäpfchen erfolgte früher durch Ausmessen der Probenäpfchen mittels eines auf den Druckzylinder aufgesetzten Meßmikroskops mit eingebautem Maßstab.

Aus der WO-A-9 419 900 ist bereits ein Verfahren bekannt, bei dem die geometrischen Istabmessungen der gravierten Probenäpfchen in einem mit einer Videokamera aufgenommenen Videobild ausgemessen werden.

In der Praxis besteht die Forderung nach einer automatischen und genaueren Auswertung des Videobildes der Probenäpfchen, um die Gravierqualität zu verbessern.

Aufgabe der vorliegenden Erfindung ist es daher, ein Verfahren zur Erzeugung und Auswertung eines Probeschnitts in einer elektronischen Graviermaschine zur Gravur von Druckformen, insbesondere von Druckzylindern, für den Tiefdruck derart zu verbessern, daß das Auffinden der Probenäpfchen im Videobild erleichtert wird und damit eine automatisierte genaue Ermittlung der geometrischen Istabmessungen der gravierten Probenäpfchen gewährleistet ist.

Diese Aufgabe wird durch die Merkmale des Anspruchs 1 gelöst. Vorteilhafte Ausgestaltungen und Weiterbildungen sind in den Unteransprüchen angegeben.

Die Erfindung wird nachfolgend anhand der Fig. 1 bis 9 näher erläutert.

Es zeigen:
- Fig. 1: ein prinzipielles Ausführungsbeispiel für eine elektronische Graviermaschine zur Gravur von Druckformen,
- Fig. 2: ein Videobild von gravierten Probenäpfchen,
- Fig. 3: die Ausbildung eines Meßbandes,
- Fig. 4: eine grafische Darstellung zur automatischen Ermittlung einer Meßstrecke innerhalb eines Meßbandes,
- Fig. 5: eine grafische Darstellung zur die Messung der Querdiagonalen eines Probenäpfches,
- Fig. 6: eine grafische Darstellung zur die Messung der Längsdiagonalen eines Probenäpfches,
- Fig. 7: eine grafische Darstellung zur die Messung der Durchstichbreite zweier Probenäpfchen,
- Fig. 8: eine grafische Darstellung zur Messung der Stegbreite zweier Probenäpfchen und
- Fig. 9: ein Videobild von gravierten Probenäpfchen mit Meßflächen um die Probenäpfchen.

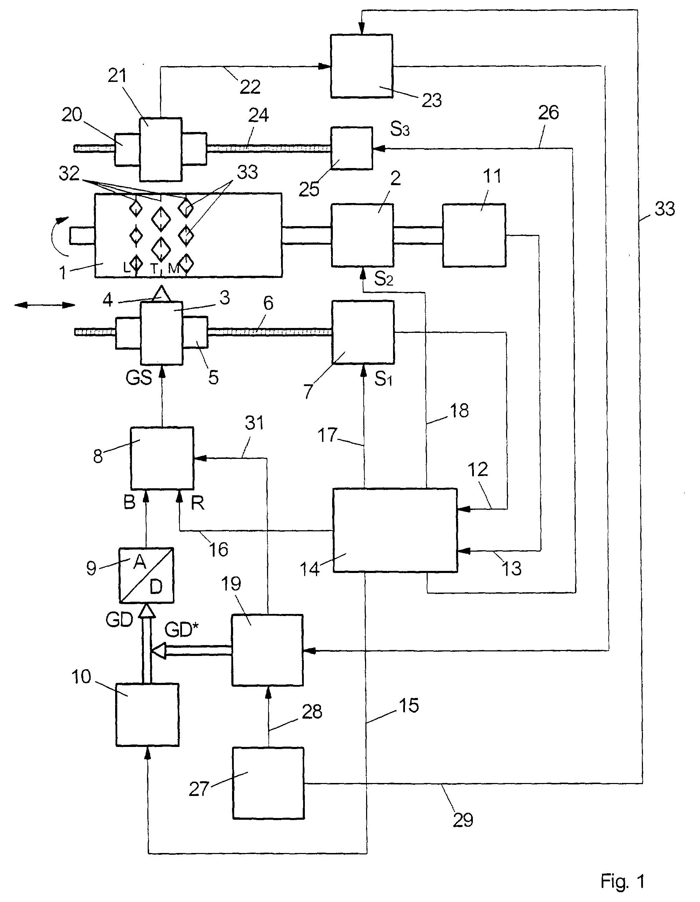

Fig. 1 zeigt ein prinzipielles Ausführungsbeispiel für eine elektronische Graviermaschine zur Gravur von Druckformen für den Tiefdruck. Die Graviermaschine ist beispielsweise ein HelioKlischograph® der Firma Hell Gravure Systems GmbH, Kiel, DE.

Ein Druckzylinder (1) wird von einem Zylinderantrieb (2) rotatorisch angetrieben. Die Gravur auf dem Druckzylinder (1) erfolgt mittels eines Gravierorgans (3), das beispielsweise als elektromagnetisches Gravierorgan mit einem Gravierstichel (4) als Schneidwerkzeug ausgebildet ist.

Das Gravierorgan (3) befindet sich auf einem Gravierwagen (5), der mittels einer Spindel (6) von einem Gravierwagenantrieb (7) in Achsrichtung des Druckzylinders (1) bewegbar ist.

Der Gravierstichel (4) des Gravierorgans (3) schneidet gravierlinienweise eine Folge von in einem Gravurraster angeordneten Näpfchen in die Mantelfläche des rotierenden Druckzylinders (1), während sich der Gravierwagen (5) mit dem Gravierorgan (3) in Vorschubrichtung an dem Druckzylinder (1) entlang bewegt.

Die Gravur der Näpfchen erfolgt bei dem dargestellten Ausführungsbeispiel auf einzelnen, kreisförmig in Umfangsrichtung um den Druckzylinder (1) verlaufenden Gravierlinien, wobei der Gravierwagen (5) jeweils nach der Gravur der Näpfchen einer Gravierlinie einen axialen Vorschubschritt zur nächsten Gravierlinie ausführt. Ein derartiges Gravierverfahren ist beispielsweise in der US-PS 4,013,829 beschrieben. Alternativ kann die Gravur auch in einer helixförmig um den Druckzylinder (1) verlaufenden Gravierlinie erfolgen, wobei der Gravierwagen (5) dann während der Gravur eine kontinuierliche Vorschubbewegung ausführt.

Der Gravierstichel (4) des Gravierorgans (3) wird durch ein Graviersteuersignal (GS) gesteuert. Das Graviersteuersignal (GS) wird in einem Gravierverstärker (8) durch Überlagerung eines periodischen Rastersignals (R) mit Bildsignalwerten (B) gebildet, welche die Tonwerte der zu gravierenden Näpfchen zwischen "Licht" (Weiß) und "Tiefe" (Schwarz) repräsentieren. Während das periodische Rastersignal (R) eine vibrierende Hubbewegung des Gravierstichels (4) zur Erzeugung des Gravurrasters bewirkt, bestimmen die Bildsignalwerte (B) entsprechend den zu gravierenden Tonwerten die jeweiligen geometrischen Abmessungen der gravierten Näpfchen wie Eindringtiefe, Querdiagonale und Längsdiagonale.

Das Gravurraster wird bezüglich Rasterwinkel und Rasterweite durch die Frequenz des Rastersignals (R), durch die Umfangsgeschwindigkeit des Druckzylinders (1) und durch die axiale Vorschubschrittweite des Gravierorgans (3) bestimmt.

Die analogen Bildsignalwerte (B) werden in einem D/A-Wandler (9) aus Gravurdaten (GD) gewonnen, die in einem Gravurdatenspeicher (10) abgelegt sind und aus diesem Gravierlinie für Gravierlinie ausgelesen und dem D/A-Wandler (9) zugeführt werden. Jedem Gravierort für ein Näpfchen ist im Gravurraster ein Gravurdatum von mindestens einem Byte zugeordnet, welches unter anderem als Gravierinformation den zu gravierenden Tonwert zwischen "Licht" und "Tiefe" enthält, wobei beispielsweise dem Tonwert "Licht" das Gravurdatum GD = 161 und dem Tonwert "Tiefe" das Gravurdatum GD = 1 zugeordnet ist.

Dem Druckzylinder (1) ist ein XY-Koordinatensystem zugeordnet, dessen X-Achse in Achsrichtung und dessen Y-Achse in Umfangsrichtung des Druckzylinders (1) orientiert sind. Die x-Ortskoordinaten der im Gravurraster angeordneten Gravierorte auf dem Druckzylinder (1), welche die axialen Positionen des Gravierstichels (4) des Gravierorgans (3) in bezug auf den Druckzylinder (1) definieren, werden von dem Gravierwagenantrieb (7) erzeugt. Ein mit dem Zylinderantrieb (2) mechanisch gekoppelter Positionsgeber (11) erzeugt die entsprechende y-Ortskoordinaten, welche die relativen Umfangspositionen des rotierenden Druckzylinders (1) gegenüber dem Gravierstichel (4) des Gravierorgans (3) definieren. Die Ortskoordinaten (x, y) der Gravierorte werden über Leitungen (12, 13) einem Steuerwerk (14) zugeführt.

Das Steuerwerk (14) steuert die Adressierung und das Auslesen der Gravurdaten (GD) aus dem Gravurdatenspeicher (10) in Abhängigkeit von den xy-Ortskoordinaten der aktuellen Gravierorte über eine Leitung (15). Das Steuerwerk (14) erzeugt außerdem das Rastersignal (R) auf einer Leitung (16) mit der für die Erzeugung des Gravurrasters erforderlichen Frequenz, einen Steuerbefehl (S₁) auf einer Leitung (17) an den Gravierwagenantrieb (7) zur Einstellung der für die Erzeugung des Gravurrasters relevanten Vorschubschrittweite und zur Steuerung des schrittweisen Vorschubs des Gravierorgans (3) während der Gravur sowie einen weiteren Steuerbefehl (S₂) auf einer Leitung (18) an den Zylinderantrieb (2) zur Einstellung der für die Erzeugung des Gravurrasters erforderlichen Umfangsgeschwindigkeit des Druckzylinders (1).

Zur Durchführung eines Probeschnitts vor der eigentlichen Gravur der Druckform weist die Graviermaschine einen Rechner (19) auf, der die zur Gravur der Probenäpfchen erforderlichen Gravurdaten (GD*) an den D/A-Wandler (9) liefert. Jedes Gravurdatum (GD*) repräsentiert den vorgegebenen Soll-Tonwert eines Probenäpfchens bzw. den entsprechenden geometrischen Sollwert, beispielsweise die Soll-Querdiagonale oder die Soll-Längsdiagonale des Probenäpfchens.

Zum Ausmessen der beim Probeschnitt gravierten Probenäpfchen ist ein in Achsrichtung des Druckzylinders (1) verschiebbarer Meßwagen (20) mit einer Videokamera (21) zur Aufnahme eines Videobildes der Probenäpfchen und eine über eine Leitung (22) mit der Videokamera (21) verbundene Bildauswertestufe (23), die auch in die Videokamera integriert sein kann, zur Ausmessung der Probenäpfchen im Videobild vorgesehen. Die Verwendung eines Meßwagens (20) ist insbesondere bei mehrkanaligen Graviermaschinen, mit denen mehrere Gravierstränge mit jeweils einem Gravierorgan (3) graviert werden, von Vorteil. In diesem Fall muß für jeden Gravierstrang ein entsprechender Probeschnitt durchgeführt und ausgemessen werden. Der Meßwagen (20) kann automatisch über eine Spindel (24) von einem Meßwagenantrieb (25) auf die erforderliche axiale Meßposition in den einzelnen Graviersträngen bewegt werden. Der Meßwagenantrieb (25) wird durch einen Steuerbefehl (S₃) auf einer Leitung (26) von dem Steuerwerk (14) aus gesteuert.

Alternativ kann die Videokamera (21) auch im Bereich des Gravierorgans (3) angeordnet werden, wobei die Aufnahme des Videobildes beispielsweise über ein Lichtleitkabel erfolgen kann.

Ein Konfigurationsspeicher (27) liefert die zur Gravur und zum Ausmessen der Probenäpfchen erforderliche Vorgaben über eine Leitung (28) an den Rechner (19) und über eine Leitung (29) an die Bildauswertestufe (23). Die Meßergebnisse werden als geometrische Istwerte von der Bildauswertestufe (23) an den Rechner (19) übertragen. In dem Rechner (19) werden durch Vergleich von vorgegebenen geometrischen Sollwerten und gemessenen Istwerten Einstellwerte zur Kalibrierung des Gravierverstärker (8) gewonnen, die dem Gravierverstärker (8) über eine Leitung (31) zugeführt werden. Mit den ermittelten Einstellwerten wird der Gravierverstärker (8) dann derart kalibriert, daß die bei der späteren Gravur der Druckform tatsächlich erzeugten Näpfchen den für eine tonwertrichtige Gravur erforderlichen Näpfchen entsprechen.

Die Kalibrierung des Gravierverstärkers (8) kann automatisch vor der Gravur der Druckform oder online während der Gravur der Druckform erfolgen. Die Kalibrierung des Gravierverstärkers (8) kann aber auch manuell durchgeführt werden, indem der Rechner (19) die ermittelten Einstellwerte lediglich anzeigt, die dann manuell auf den Gravierverstärker (8) übertragen werden.

Zur Gravur der Probenäpfchen ruft der Rechner (19) beispielsweise die Gravurdaten (GD*) für die Soll-Tonwerte "Tiefe " (GD* =1), "Licht" (GD* = 161) und für mindestens einen "Mittelton" (GD* = 80) zwischen "Licht" und "Tiefe" auf. Die aufgerufenen Gravurdaten (GD*) werden in das Graviersteuersignal (GS) für das Gravierorgan (3) umgesetzt. Das Gravierorgan (3) graviert im Gravurraster auf nebeneinander liegenden Gravierlinien (32) mindestens ein Probenäpfchen (33) für "Licht" (L), "Tiefe" (T) und "Mittelton" (M). Vorzugsweise werden auf jeder Gravierlinie (32) mehrere gleiche Probenäpfchen (33) graviert, beispielsweise über einen wählbaren Gravierlinienbereich. Wenn außer der Querdiagonalen und der Längsdiagonalen auch noch die Stegbreite ermittelt werden soll, müssen Probenäpfchen (33) für "Tiefe" auf mindestens zwei nebeneinander liegenden Gravierlinien (32) graviert werden. Ein entsprechender Probeschnitt muß für jeden Farbauszug bez. für jedes Gravurraster durchgeführt werden, wobei die verschiedenen Parameter des Gravurrasters wie Rasterwinkel und Rasterweite in dem Konfigurationsspeicher (27) abgelegt sind.

Nach dem Probeschnitt nimmt die Videokamera (21) ein Videobild der gravierten Probenäpfchen (33) auf. Die Aufnahme der Probenäpfchen (33) kann bei stehendem Druckzylinder (1) oder mit einer entsprechenden Synchronisation bei rotierendem Druckzylinder (1) erfolgen.

Das Ausmessen der geometrischen Parameter der gravierten Probenäpfchen (33) in der Bildauswertestufe (23) anhand des aufgenommenen Videobildes wird nachfolgend näher erläutert.

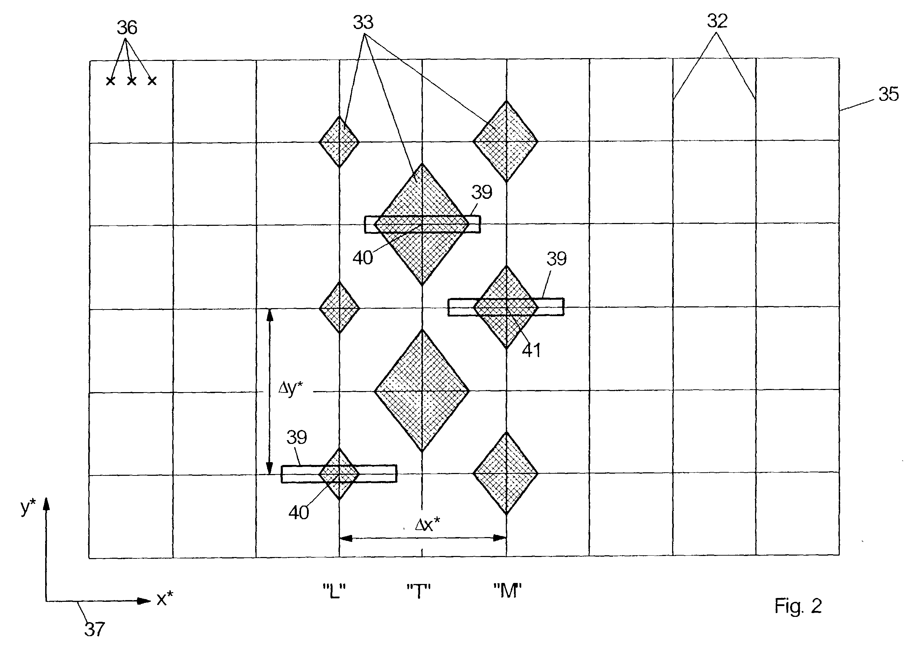

Fig. 2 zeigt ein mit der Videokamera (21) aufgenommenes Videobild (35) der gravierten Probenäpfchen (33). Dargestellt ist das aus horizontalen und vertikalen Rasterlinien bestehende orthogonale Gravurraster, wobei die vertikalen Rasterlinien die Gravierlinien (32) sind. Auf drei nebeneinander liegenden Gravierlinien (32) sind beispielsweise gravierten Probenäpfchen (33) für "Licht" (L), "Tiefe" (T) und "Mittelton" (M) dargestellt. Die Schwerpunkte der Probenäpfchen (33) liegen auf den Schnittpunkten der Rasterlinien des Gravurrasters. Um eine sichere Auswertung zu gewährleisten, ist die Größe des Videobildes (35) so gewählt, daß mindestens ein vollständiges Probenäpfchen (33) für jeden Soll-Tonwert innerhalb des Videobildes (35) liegt.

Das Videobild (35) besteht aus einer Vielzahl von Pixeln (36), deren Lage im Videobild durch die Ortskoordinaten (x*, y*) eines XY-Meßsystems definiert sind, das ebenfalls in Achsrichtung und in Umfangsrichtung des Druckzylinders (1) ausgerichtet ist. Jedem Pixel (36) ist ein den jeweiligen Grauwert kennzeichnendes Videodatum (VD) von beispielsweise 8 Bit zugeordnet, so daß zwischen "Schwarz" (VD = 0) und "Weiß" (VD = 255) insgesamt 254 Grauwerte unterschieden werden können. Die Grauwerte können durch Filterung oder mittels Schwellen derart auf zwei Werte reduziert werden, daß beispielsweise denjenigen Pixeln, die auf die Mantelfläche des Druckzylinders (1) fallen, das Videodatum VD = 0 und denjenigen Pixeln, die auf den Flächen der Probenäpfchens (33) liegen, das Videodatum VD = 1 zugeordnet ist. Dabei ist die Kontur (Dichtesprung) einer Näpfchenfläche durch den Übergang des Videodatums von "0" auf "1" oder von "1" auf "0" gekennzeichnet.

Zur Ausmessen der geometrischen Parameter der Probenäpfchen (33) im Videobild (35) wird mindestens eine über das Videobild (35) verschiebbares Meßfeld definiert. Das Meßfeld ist im Ausführungsbeispiel steifenförmig ausgebildet und wird nachfolgend als Meßband (39) bezeichnet, dessen Längsausdehnung mindestens gleich dem Abstand zweier Gravierlinien voneinander ist. Das Ausmessen der Probenäpfchen (33) für "Licht", "Tiefe" und "Mittelton" kann nacheinander mit einem Meßband (39) oder mit jeweils einem separaten Meßband (39) erfolgen.

Das Meßband (39) kann auf auswählbaren Meßorten (40) innerhalb des Videobildes (35) verschoben und in einer beliebigen Richtung bezüglich des XY-Meßsystems (37) ausgerichtet werden, wobei als Meßort (40) beispielsweise der Mittelpunkt des Meßbandes (39) definiert ist.

Vor der Probegravur wird eines der Probenäpfchen (33) als Bezugsnäpfchen ausgewählt, dessen Mittelpunkt Bezugsort (41) für die Positionierung des Meßbandes (39) auf dem gewünschten Meßort (40) innerhalb des Videobildes (35) sein soll. In bevorzugter Weise wird als Bezugsort (41) der Mittelpunkt ein Probenäpfchen (33) für einen Soll-Mittelton (M) ausgewählt.

Die Festlegung der Meßorte (40) für die Meßbänder (39) erfolgt durch Vorgabe der koordinatenmäßigen Abstände (Δx*, Δy*) von dem Bezugsort (41) in Abhängigkeit von der Geometrie des Gravurrasters für jeden Farbauszug. Der Bezugsort (41), die vorgegebenen Abstände (Δx*, Δy*) vom Bezugsort (41) und die gewünschte Ausrichtung des Meßbandes (39) können in den Konfigurationsspeicher (27) abgespeichert werden.

Da die Probenäpfchen (33) auf den Gravierlinien (32) liegen, ist der Abstand (Δx*,) des Meßbandes (39) vom Bezugsort (41) in X-Richtung entweder Null, gleich dem Gravierlinienabstand oder einem Vielfachen des Gravierlinienabstandes. Der Abstand (Δy*) vom Bezugsort (41) in Y-Richtung ist dagegen davon abhängig was gemessen werden soll.

Zur Messung der maximalen Querdiagonalen (d_{Qmax}) oder einer beliebigen Querdiagonalen (d_{Q}), d.h. der Ausdehnung der Näpfchenfläche in X-Richtung (Vorschubrichtung), wird das Meßband (39) mit seiner Längsausdehnung in X-Richtung ausgerichtet. Zur Messung der maximalen Querdiagonalen (d_{Qmax}) ist der Abstand (Δy*) vom Bezugsort (41) in Y-Richtung entweder Null, gleich der Rasterweite in Y-Richtung oder einem Vielfachen der Rasterweite. Zur Messung einer beliebigen Querdiagonalen (d_{Q}) werden entsprechende Zwischenabstände vom Bezugsort (41) in Y-Richtung vorgegeben. Der Abstand (Δx*,) des Meßbandes (39) vom Bezugsort (41) in X-Richtung ist in beiden Fällen entweder Null, gleich dem Gravierlinienabstand oder einem Vielfachen des Gravierlinienabstandes.

Zur Messung der maximalen Längsdiagonalen (d_{Lmax}) oder einer beliebigen Längsdiagonalen (d_{L}), d.h. der Ausdehnung der Näpfchenfläche in Y-Richtung (Umfangsrichtung), wird das Meßband (39) mit seiner Längsausdehnung in Y-Richtung ausgerichtet. Zur Messung der maximalen Längsdiagonalen (d_{Lmax}) ist der Abstand (Δx*) des Meßbandes (39) vom Bezugsort (41) in X-Richtung entweder Null, gleich dem Gravierlinienabstand oder einem Vielfachen des Gravierlinienabstandes. Zur Messung einer beliebigen Längsdiagonalen (d_{L}) werden entsprechende Zwischenabstände vom Bezugsort (41) in X-Richtung vorgegeben. Der Abstand (Δy*) vom Bezugsort (41) in Y-Richtung ist in beiden Fällen entweder Null, gleich der Rasterweite in Y-Richtung oder einem Vielfachen der Rasterweite.

Zur Messung des Durchstichs (d_{DS}), d.h. der Breite des Gravierkanals in X-Richtung, der zwei auf einer Gravierlinie gravierten Näpfchen verbindet , wird das Meßband (39) mit seiner Längsausdehnung wiederum in X-Richtung ausgerichtet. Der Abstand (Δx*) des Meßbandes (39) vom Bezugsort (41) in X-Richtung ist wiederum entweder Null, gleich dem Gravierlinienabstand oder einem Vielfachen des Gravierlinienabstandes. Der Abstand (Δy*) vom Bezugsort (41) in Y-Richtung ist dabei entweder Null, gleich der Rasterweite in Y-Richtung oder einem Vielfachen der Rasterweite.

Zur Messung der Stegbreite (d_{SB}), d.h. die Breite des Materials, das zwischen zwei auf benachbarten Gravierlinien gravierten tiefen Näpfchen stehengeblieben ist, wird das Meßband (39) in zweckmäßiger Weise derart gedreht, daß es mit seiner Längsausdehnung annähernd senkrecht zum Verlauf des Steges ausgerichtet ist.

Das Meßband (39) besteht aus mindestens einer Meßzeile (39'), vorzugsweise aus mehreren parallel zueinander verlaufenden Meßzeilen (39'), und jede Meßzeile umfaßt eine Anzahl von Pixeln (36), deren Abstand voneinander ein Längeninkrement repräsentiert. Durch Zählen der Pixel (36) innerhalb einer Meßstrekke kann somit die Länge der Meßstrecke als Vielfaches des Längeninkrements gemessen werden.

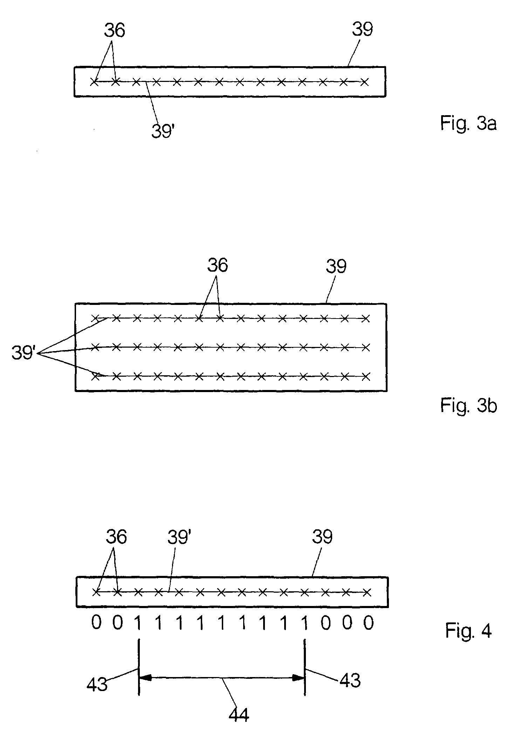

Fig. 3a zeigt die Ausbildung eines Meßbandes (39), das aus einer Meßzeilen (39') mit vierzehn Pixeln (36) besteht.

Fig. 3b zeigt die Ausbildung eines Meßbandes (39), das aus drei parallel zueinander verlaufenden Meßzeilen (39') mit jeweils vierzehn Pixeln (36) besteht.

Wie bereits erwähnt bilden die Ränder einer Näpfchenfläche, eines Steges oder eines Durchstichs bilden im aufgenommenen Videobild (35) eine Kontur. Die Meßstrecke für Querdiagonale, Längsdiagonale, Stegbreite und Durchstichbreite ergibt sich somit aus dem jeweiligen Abstand entsprechender Konturen voneinander.

Die Endpunkte einer Meßstrecke für Querdiagonale, Längsdiagonale, Stegbreite und Durchstichbreite werden in vorteilhafter Weise mit Hilfe des Meßbandes (39) selbst durch eine automatische Erkennung von zwei benachbarten Konturen ermittelt, indem die Videodaten (VD) von jeweils zwei aufeinander folgende Pixel (36) einer Meßzeile (39') auf einen Konturübergang hin untersucht werden.

Fig. 4 zeigt ein Meßband (39) mit einer Meßzeile (39') und zwei voneinander beabstandete Konturlinien (43). Dargestellt sind außerdem die den einzelnen Pixeln (36) zugeordneten Videodaten (VD), wobei die Konturlinien (43) durch den Übergang "0" auf "1" und "1" auf "0" gekennzeichnet ist. Durch eine automatische Konturenerkennung werden die Endpunkte der Meßstrecke (44) ermittelt, die im gezeigten Fall acht Pixel (36) lang ist.

Die Reihenfolge, in der die Videodaten (VD) benachbarter Pixel (36) zur automatischen Konturerkennung untersucht werden, ist davon abhängig, was gemessen werden soll. Bei der Messung der Querdiagonalen (d_{Q}) oder der Längsdiagonalen (d_{L}) werden die Videodaten (VD) in zweckmäßiger Weise von der Mitte einer Meßzeile (39') aus, d.h. von der Mitte zu den Rändern einer Näpfchenfläche, untersucht.

Bei Messung der Durchstichbreite (d_{DS}) oder der Stegbreite (d_{SB}) hingegen erweist es sich als vorteilhaft, die Videodaten (VD) von den Endpunkten einer Meßzeile (39') aus zur Mitte hin zu untersuchen.

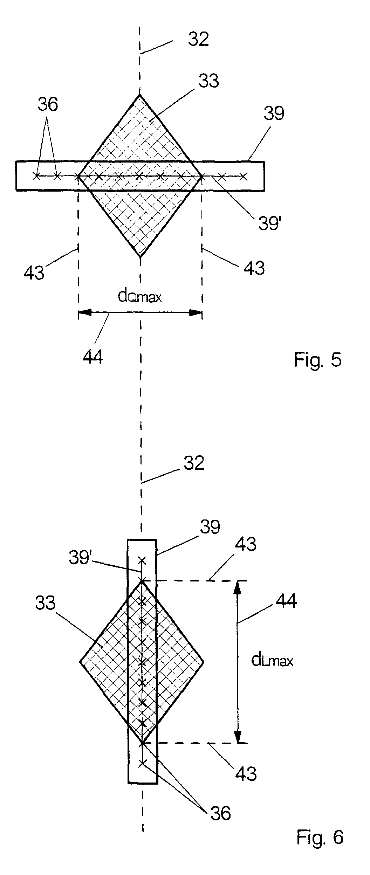

Fig. 5 zeigt die Messung der maximalen Querdiagonalen (d_{Qmax}) eines Probenäpfches (33) mit dem in X-Richtung ausgerichteten Meßband (39), wobei die Endpunkre der Meßstrecke (44) durch die Konturen (43) des Probenäpfchens (33) definiert ist.

Fig. 6 zeigt die Messung der maximalen Längsdiagonalen (d_{Lmax}) eines Probenäpfches (33) mit dem in Y-Richtung ausgerichteten Meßband (39).

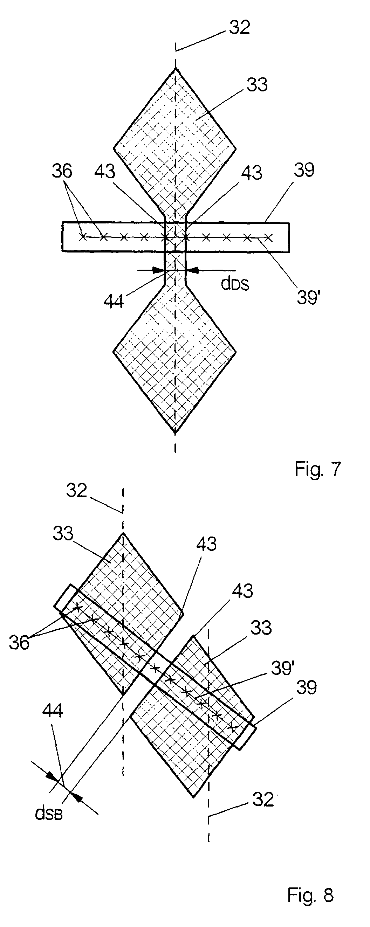

Fig. 7 zeigt die Messung der Durchstichbreite (d_{DS}) zweier auf einer Gravierlinie (32) nebeneinander gravierten Probenäpfchen (33) für den Tonwert "Tiefe" mit dem in X-Richtung ausgerichteten Meßband (39).

Fig. 8 zeigt die Messung der Stegbreite (d_{SB}) zweier auf nebeneinander liegenden Gravierlinien (32) gravierten Probenäpfchen (33) mit dem quer zu den Gravierlinien (32) ausgerichteten Meßband (39).

Zur Erhöhung der Erkennungs- und Meßsicherheit sowie zur Ausmessen von minimalen bez. maximalen Längen und von Flächen werden vorzugsweise Meßbänder (39) mit einer Vielzahl von Meßzeilen (39') verwendet.

Die Erkennungs- und Meßsicherheit kann dadurch verbessert werden, daß die Meßergebnisse jeder Meßzeile (39') miteinander verglichen und nur bei Übereinstimmung weitergegeben werden. Zur Ermittlung von maximalen und minimalen Längen werden die Meßergebnisse der einzelnen Meßzeilen (39') einer Extremwertauswahl unterzogen. Bei Messung der Querdiagonalen (d_{Q}) und der Längsdiagonalen (d_{L}) wird in vorteilhafter Weise eine Maximumauswahl, bei Messung der Stegbreite (d_{SB}) und des Durchstichs (d_{DS}) eine Minimumauswahl durchgeführt. Zur Messung einer Näpfchenfläche werden die Meßergebnisse der einzelnen Meßzeilen (39') aufaddiert.

Bei einer vorteilhafte Weiterbildung des Verfahrens wird zur weiteren Verbesserung der Meßsicherheit bei Auswertung des Videobildes (35) um jedes Probenäpfchen (33), dessen maximale Querdiagonale (d_{Qmax}) oder Längsdiagonale (d_{Lmax}) gemessen wird, zusätzlich eine definierte Meßfläche (45) gelegt, deren Größe mindestens der Näpfchenfläche des entsprechenden Probenäpfchens (33) entspricht. Die Größe des Meßbandes (39) wird an die Größe des Meßfläche (45) angepaßt, so daß alle Pixel (36) innerhalb der Meßfläche (45) von dem Meßband (39) erfaßt werden können.

Es wird dann mit dem Meßband (39) die Näpfchenfläche des betreffenden Probenäpfchens (33) als Anzahl von Pixeln (33) bestimmt, indem die in jeder Meßzeile (39') des Meßbandes (39) gezählte Anzahl von Pixeln (36) aufaddiert werden.

Aus der mit dem Meßband (39) gemessenen maximalen Querdiagonalen (d_{Qmax}) oder Längsdiagonalen (d_{Lmax}) des Probenäpfchens (33) wird dann die Näpfchenfläche dieses Probenäpfchens (33) berechnet. Wird keine Übereinstimmung zwischen der berechneten und der gemessenen Näpfchenfläche des Probenäpfchens (33) festgestellt, wird das Meßergebnis für die maximale Querdiagonalen (d_{Qmax}) oder Längsdiagonale (d_{Lmax}) des Probenäpfchens (33) annuliert.

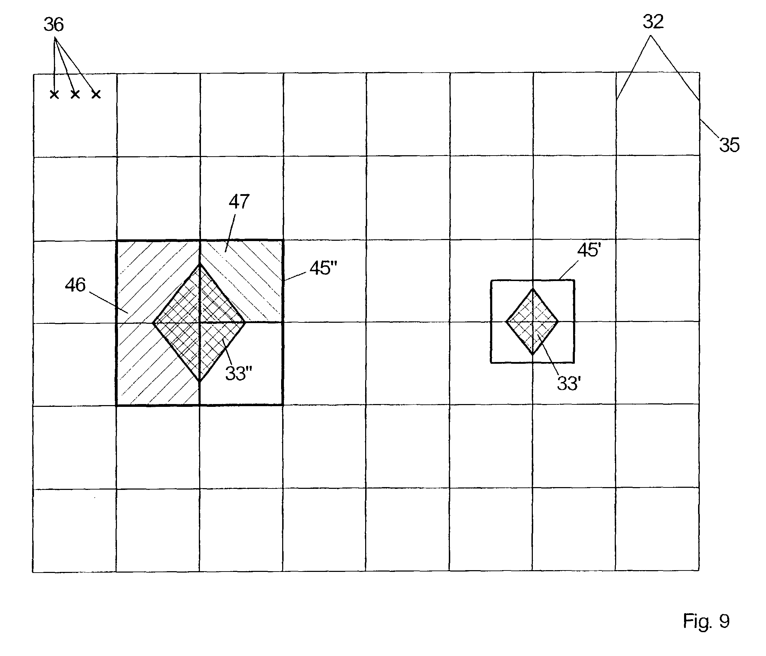

Fig. 9 zeigt ein weiters Videobild (35) von gravierten Probenäpfchen (33). Um die Näpfchenfläche eines Probenäpfchens (33') für den Tonwert "Licht" ist eine Meßfläche (45') definiert. Um die Näpfchenfläche eines Probenäpfchens (33") für den Tonwert "Tiefe" ist eine entsprechend größere Meßfläche (45") definiert. Alternativ kann auch nur eine Teilmeßfläche der Meßfläche (45") zur Messung der Näpfchenfläche des Probenäpfchens (33") herangezogen werden, beispielsweise eine Teilmeßfläche (46), die der halben Meßfläche (45") entspricht oder eine Teilmeßfläche (47), die einem Viertel der Meßfläche (45") entspricht. Aus den in den einzelnen Teilmeßflächen (46, 47) ermittelten Flächenanteilen kann dann die gesamte Näpfchenfläche berechnet werden, wobei zu berücksichtigen ist, ob es sich um symmetrische oder unsymmetrische Fiächenanteile in Bezug auf den Flächenschwerpunkt handelt.

Bei einer weiteren vorteilhaften Weiterbildung des Verfahrens wird das ausgewählte Bezugsnäpfchen bzw. der Bezugsort (41) im Videobild (35) automatisch anhand der charakteristischen Größe der Näpfchenfläche des ausgewählten Bezugsnäpfchens ermittelt.

Dazu wird die Näpfchenfläche des ausgewählten vorgegeben. Dann werden im Videobild (35) die Näpfchenflächen aller Probenäpfchen (33) durch Auswertung der Videodaten (VD) der einzelnen Pixel (36) festgestellt und jeweils mit der Näpfchenfläche des ausgewählten Bezugsnäpfchens verglichen. Das Bezugsnäpfchen und damit der Bezugsort (41) ist erkannt, wenn Flächenübereinstimmung festgestellt wird.

Alternativ kann ein Erkennungsfenster definiert werden, das kleiner als das Videobild (35) In diesem Fall wird das Erkennungsfenster schrittweise über das Videobild (35) verschoben, wobei in jeder Fensterposition ein entsprechender Flächenvergleich durchgeführt wird.

## Patentansprüche

1. Verfahren zur Erzeugung und Auswertung eines Probeschnitts in einer elektronischen Graviermaschine zur Gravur von Druckformen, insbesondere von Druckzylindern, für den Tiefdruck, bei dem
- aus Gravurdaten (GD), welche zu gravierende Soll-Tonwerte zwischen "Licht" (Weiß) und "Tiefe" (Schwarz) darstellen, und einem periodischen Rastersignal (R) zur Erzeugung eines Gravurrasters ein Graviersteuersignal (GS) zur Ansteuerung des Gravierstichels (4) eines Gravierorgans (3) gebildet wird,
- der Gravierstichel (4) in den Druckzylinder (1) gravierlinienweise eine Folge von in dem Gravurraster angeordneten Näpfchen eingraviert, deren geometrischen Parameter die gravierten Ist-Tonwerte bestimmen,
- das Gravierorgan (3) zur flächenhaften Gravur des Druckzylinders (1) eine in Achsrichtung des Druckzylinders (1) gerichtete Vorschubbewegung ausführt,
- bei einer vor der eigentlichen Gravur der Druckform (1) stattfindenden Probegravur Probenäpfchen (33) für vorgegebene Soll-Tonwerte graviert werden,
- von den bei der Probegravur gravierten Probenäpfchen (33) ein Videobild (35) erzeugt wird,
- die geometrischen Parameter der gravierten Probenäpfchen (33) in dem Videobild (35) ausgemessen und mit den geometrischen Parametern, welche die vorgegebenen Soll-Tonwerte bestimmen, verglichen werden und
- aus dem Vergleich Einstellwerte abgeleitet werden, mit denen das Graviersteuersignal (GS) derart kalibriert wird, daß die gravierten Ist-Tonwerte den zu gravierenden Soll-Tonwerten entsprechen, **dadurch gekennzeichnet, daß**
- in dem aufgenommenen Videobild (35) ein graviertes Probenäpfchen (33) für einen der vorgegebenen Soll-Tonwerte als Bezugsort (41) in einem dem Videobild (35) zugeordneten XY-Meßsystem (37) ausgewählt wird,
- in Abhängigkeit von den Rasterparametern des Gravurrasters Meßorte (40) zum Ausmessen der geometrischen Parameter der Probenäpfchen (33) im Videobild (35) als koordinatenmäßige Abstände (Δx, Δy) zu dem ausgewählten Bezugsort (41) festgelegt werden und
- die geometrische Parameter der Probenäpfchen (3) an den festgelegten Meßorten (40) durch Auswertung des Videobildes (35) ausgemessen werden.

2. Verfahren nach Anspruch 1, **dadurch gekennzeichnet, daß** bei der Probegravur Probenäpfchen (33) für die Soll-Tonwerte "Licht", "Tiefe" und mindestens einen "Mittelton" graviert werden.

3. Verfahren nach Anspruch 1 oder 2, **dadurch gekennzeichnet, daß** die Probenäpfchen (33) für die Soll-Tonwerte "Licht", "Tiefe" und "Mittelton" jeweils auf benachbarten Gravierlinien (32) graviert werden.

4. Verfahren nach mindestens einem der Ansprüche 1 bis 3, **dadurch gekennzeichnet, daß** auf jeder Gravierlinie (32) Probenäpfchen (33) über einen Gravierlinienbereich graviert werden.

5. Verfahren nach mindestens einem der Ansprüche 1 bis 4, **dadurch gekennzeichnet, daß** als Bezugsort (41) der Flächenmittelpunkt eines gravierten Probenäpfchens (33) ausgewählt wird.

6. Verfahren nach mindestens einem der Ansprüche 1 bis 5, **dadurch gekennzeichnet, daß** als Bezugsort (41) der Flächenmittelpunkt eines gravierten Probenäpfchens (33) für den Soll-Tonwert "Mittelton" ausgewählt wird.

7. Verfahren nach mindestens einem der Ansprüche 1 bis 6, **dadurch gekennzeichnet, daß** die auszumessenen geometrischen Parameter der Probenäpfchen (33) die Querdiagonalen, die Längsdiagonalen, die Durchstiche, die Stegbreiten oder die Näpfchenflächen der gravierten Probenäpfchen (33) sind.

8. Verfahren nach mindestens einem der Ansprüche 1 bis 7, **dadurch gekennzeichnet, daß**
- das Videobild (35) in Pixel (36) unterteilt ist,
- ein über das Videobild (35) auf die festgelegten Meßorte (40) verschiebbares Meßfeld (39) zur Messung der geometrischen Parameter der Probenäpfchen (33) erzeugt wird,
- das Meßfeld (39) mindestens eine Meßzeile (39') mit einer Anzahl von Pixeln (36) aufweist, deren Abstände voneinander Längeninkremente repräsentieren,
- die auf eine Meßstrecke (44) im Videobild (35) entfallende Anzahl von Pixeln (36) der Meßzeile (39') gezählt werden und
- die Länge der Meßstrecke (44) als Vielfaches der Längeninkremente ermittelt wird.

9. Verfahren nach Anspruch 8, **dadurch gekennzeichnet, daß** die Meßstrecke (44) im Videobild (35) durch den Abstand zweier zu einem Probenäpfchen (33) gehörender Konturen (43) definiert ist.

10. Verfahren nach Anspruch 8 oder 9, **dadurch gekennzeichnet, daß** die Konturen (43) der Probenäpfchen (33) durch eine automatische Auswertung des Videobildes (35) erkannt werden.

11. Verfahren nach mindestens einem der Ansprüche 8 bis 10, **dadurch gekennzeichnet, daß** die Konturen (43) der Probenäpfchen (33) mittels mindestens einer Meßzeile (39') des Meßbandes (39) erkannt werden.

12. Verfahren nach mindestens einem der Ansprüche 8 bis 11, **dadurch gekennzeichnet, daß**
- jedem Pixel (36) des Videobildes (35) ein Videodatum (VD) zugeordnet ist, das kennzeichnet, ob das betreffende Pixel (36) Bestandteil eines Probenäpfchens ist oder nicht,
- die Videodaten (VD) von jeweils zwei aufeinanderfolgender Pixel (36) der Meßzeile (39') auf einen Änderung hin untersucht werden und
- eine festgestellte Änderung der Videodaten (VD) als Kontur (43) erkannt wird.

13. Verfahren nach Anspruch 12, **dadurch gekennzeichnet, daß** die Untersuchung der Videodaten (VD) zur Erkennung der Konturen (43) von Querdiagonalen und Längsdiagonalen von der Mitte zu den Enden der Meßzeile (39') erfolgt.

14. Verfahren nach Anspruch 12 oder 13, **dadurch gekennzeichnet, daß** die Untersuchung der Videodaten (VD) zur Erkennung der Konturen (43) von Durchstich und Stegbreiten von den Enden zu der Mitte der Meßzeile (39') erfolgt.

15. Verfahren nach mindestens einem der Ansprüche 8 bis 14, **dadurch gekennzeichnet, daß** als Meßort (40) der Mittelpunkt des Meßfeldes (39) definiert ist.

16. Verfahren nach mindestens einem der Ansprüche 8 bis 15, **dadurch gekennzeichnet, daß** den Probenäpfchen (33) für "Licht", "Tiefe" und "Mittelton" jeweils ein separates Meßfeld (39) zugeordnet wird.

17. Verfahren nach mindestens einem der Ansprüche 8 bis 16, **dadurch gekennzeichnet, daß**
- das Meßfeld (39) als streifenförmiges Meßband ausgebildet ist und
- die Längsausdehnung des Meßbandes (39) mindestens dem Abstand zweier Gravierlinien (32) voneinander beträgt.

18. Verfahren nach Anspruch 17, **dadurch gekennzeichnet, daß** das Meßband (39) in den Meßorten (40) mit seiner Längsausdehnung in beliebiger Richtung bezüglich des XY-Meßsystems (37) ausgerichtet wird.

19. Verfahren nach 17 oder 18, **dadurch gekennzeichnet, daß** das Meßband (39) mit seiner Längsausdehnung zur Messung von Querdiagonalen und Durchstich in X-Richtung des XY-Meßsystems (37) (Vorschubrichtung) ausgerichtet wird.

20. Verfahren nach mindestens einem der Ansprüche 17 bis 19, **dadurch gekennzeichnet, daß** das Meßband (39) mit seiner Längsausdehnung zur Messung von Längsdiagonalen in Y-Richtung des XY-Meßsystems (37) (Umfangsrichtung) ausgerichtet wird.

21. Verfahren nach mindestens einem der Ansprüche 17 bis 20, **dadurch gekennzeichnet, daß** das Meßband (39) mit seiner Längsausdehnung zur Messung von Stegbreiten im XY-Meßsystems (37) quer, vorzugsweise senkrecht zum Verlauf des Steges, ausgerichtet wird.

22. Verfahren nach mindestens einem der Ansprüche 17 bis 21, **dadurch gekennzeichnet, daß**
- das Meßband (39) eine Anzahl von parallel zueinander angeordneten Meßzeilen (39') aufweist,
- die mit den einzelnen Meßzeilen (39') erzielten Meßergebnisse miteinander verglichen werden und
- das Meßergebnis einer Meßzeile (39') zur Erhöhung der Meßsicherheit nur bei Übereinstimmung der miteinander verglichenen Meßergebnisse weitergegeben wird.

23. Verfahren nach mindestens einem der Ansprüche 17 bis 22, **dadurch gekennzeichnet, daß**
- das Meßband (39) eine Anzahl von parallel zueinander angeordneten Meßzeilen (39') aufweist,
- die mit den einzelnen Meßzeilen (39') erzielten Meßergebnisse einer Extremwertauswahl unerzogen werden und
- nur das größte oder kleinste Meßergebnis weitergegeben wird.

24. Verfahren nach mindestens einem der Ansprüche 17 bis 23, **dadurch gekennzeichnet, daß**
- das Meßband (39) eine Anzahl von parallel zueinander angeordneten Meßzeilen (39') aufweist,
- die mit den einzelnen Meßzeilen (39') erzielten Meßergebnisse zur Ermittlung der Größe einer Fläche aufaddiert werden und
- die Summe als Meßergebnis weitergegeben wird.

25. Verfahren nach mindestens einem der Ansprüche 17 bis 24, **dadurch gekennzeichnet, daß**
- mittels des Meßbandes (39) die maximale Querdiagonale oder Längsdiagonale eines Probenäpfchens (33) gemessen wird,
- aus der gemessenen maximalen Querdiagonalen oder Längsdiagonalen die Näpfchenfläche des betreffenden Probenäpfchens (33) berechnet wird,
- mittels des Meßbandes (39) die Näpfchenfläche des betreffenden Probenäpfchens (33) ausgemessen wird,
- die gemessene und die berechnete Näpfchenfläche miteinander verglichen werden und
- das Meßergebnis für die maximale Querdiagonale oder Längsdiagonale nur bei Übereinstimmung von gemessener und berechneter Näpfchenfläche weitergegeben wird.

26. Verfahren nach mindestens einem der Ansprüche 1 bis 25, **dadurch gekennzeichnet, daß** das Probenäpfchen (33), das Bezugsort (41) sein soll, im Videobild (35) automatisch ermittelt wird.

27. Verfahren nach mindestens einem der Ansprüche 1 bis 26, **dadurch gekennzeichnet, daß**
- die Näpfchenfläche des als Bezugsort (41) ausgewählten Probenäpfchens (33) vorgegeben wird,
- im Videobild (35) die Näpfchenflächen aller Probenäpfchen (33) anhand der Videodaten (VD) festgestellt werden,
- die festgestellten Näpfchenflächen der Probenäpfchen (33) mit der vorgegebenen Näpfchenfläche verglichen werden und
- dasjenige Probenäpfchen (33) als Bezugsort (41) markiert wird, dessen gemessene Näpfchenfläche mit der vorgegebenen Näpfchenfläche übereinstimmt.

## Claims

1. Method of producing and evaluating a test cut on an electronic engraving machine for engraving printing surfaces, and particularly printing cylinders, for gravure printing, in which
- an engraving control signal (GS) to operate the engraving stylus (4) of an engraving member (3) is obtained from engraving data (GD) which represents desired tonal values between "high light" (white) and "shadow" (black) and from a cyclic screening signal (R) for producing a gravure screen,
- in the printing cylinder (1), the engraving stylus (4) engraves, engraving line by engraving line, a series of cells laid out in the gravure screen whose geometrical parameters determine the actual tonal values engraved,
- to allow the printing cylinder (1) to be engraved over an area, the engraving member (3) performs a feed movement directed in the axial direction of the printing cylinder (1),
- in a test cut engraving operation which takes place prior to the engraving proper of the printing surface (1), test cells (33) for preset desired tonal values are engraved,
- a video image (35) is obtained of the test cells (33) which are engraved in the course of the test cut engraving operation,
- the geometrical parameters of the test cells (33) shown in the video picture (35) which have been engraved are measured and compared with geometrical parameters which determine the preset desired tonal values, and
- from the comparison are derived settings which are used to calibrate the engraving control signal (GS) in such a way that the actual tonal values engraved correspond to the desired tonal values to be engraved,
**characterised in that**
- in the video image (35) which is recorded, an engraved test cell (33) for one of the preset desired tonal values is selected as a reference point (41) in an XY measuring system (37) associated with the video image (35),
- as a function of the screen parameters of the gravure screen, measurement points (40) to allow the geometrical parameters of the test cells (33) to be measured are specified in the video image (35) as distances in the coordinate directions (Δx, Δy) from the reference point (41) selected, and
- the geometrical parameters of the test cells (33) at the measurement points specified (40) are measured by evaluating the video image (35).

2. Method according to claim 1, **characterised in that** test cells (33) for the desired tonal values "high light", "shadow" and at least one "mid tone" are engraved in the test cut engraving operation.

3. Method according to claim 1 or 2, **characterised in that** the test cells (33) for the desired tonal values "high light", "shadow" and "mid tone" are engraved on respective adjoining engraving lines (32).

4. Method according to at least one of claims 1 to 3, **characterised in that** test cells (33) are engraved on each engraving line (32) over a segment of the engraving line.

5. Method according to at least one of claims 1 to 4, **characterised in that** the reference point (41) selected is the centre of area of an engraved test cell (33).

6. Method according to at least one of claims 1 to 5, **characterised in that** the reference point (41) selected is the centre of area of an engraved test cell (33) for the desired tonal value "mid tone".

7. Method according to at least one of claims 1 to 6, **characterised in that** the geometrical parameters of the test cells (33) which are to be measured are the transverse diagonals, the longitudinal diagonals, the cut outs, the gutter widths or the areas of the test cells (33) which are engraved.

8. Method according to at least one of claims 1 to 7, **characterised in that**
- the video image (35) is divided into pixels (36),
- a measuring area (39) which can be moved over the video image (35) and onto the measurement points specified (40) is generated to allow the geometrical parameters of the test cells (33) to be measured,
- the measuring area (39) has at least one measuring line (39') having a number of pixels (36), the distances between which represent increments of length
- the number of pixels (36) in the measuring line (39') which are assignable to a distance to be measured (44) in the video image (35) are counted, and
- the length of the distance to be measured (44) is found as a multiple of the increments of length.

9. Method according to claim 8, **characterised in that** the distance to be measured (44) in the video image (35) is defined as the distance between two boundary lines (43) belonging to a test cell (33).

10. Method according to claim 8 or 9, **characterised in that** the boundary lines (43) of the test cells (33) are found by an automatic analysis of the video image (35).

11. Method according to at least one of claims 8 to 10, **characterised in that** the boundary lines (43) of the test cells (33) are found by means of at least one measuring line (39') in the measuring area (39).

12. Method according to at least one of claims 8 to 11, **characterised in that**
- each pixel (36) in the video image (35) has assigned to it an item of video data (VD) which indicates whether the pixel concerned (36) is or is not part of a test cell,
- the items of video data (VD) for two successive pixels (36) at a time on the measuring line (39') are examined for a change between them, and
- a change which is found between the items of video data (VD) is recognised as a boundary line (43).

13. Method according to claim 12, **characterised in that** the examination of the items of video data (VD) to enable the boundary lines (43) of transverse diagonals and longitudinal diagonals to be recognised is made from the centre of the measuring line (39') to its ends.

14. Method according to claim 12 or 13, **characterised in that** the examination of the items of video data (VD) to enable the boundary lines (43) of cut outs and gutter widths to be recognised is made from the ends of the measuring line (39') to its centre.

15. Method according to at least one of claims 8 to 14, **characterised in that** the centre of the measuring area (39) is defined as the measurement point (40).

16. Method according to at least one of claims 8 to 15, **characterised in that** the test cells (33) for "high light", "shadow" and "mid tone" have separate respective measuring area (39) assigned to them.

17. Method according to at least one of claims 8 to 16, **characterised in that**
- the measuring area (39) is in the form of a strip-like measuring band and
- the longitudinal dimension of the measuring band (39) is equal to at least the distance between two engraving lines (32).

18. Method according to claim 17, **characterised in that** at the measurement points (40) the measuring band (39) is orientated with its longitudinal dimension in any desired direction relative to the XY system (37).

19. Method according to claim 17 or 18, **characterised in that**, to allow transverse diagonals and cut outs to be measured, the measuring band (39) is orientated with its longitudinal dimension in the X direction of the XY system (37) (the feed direction).

20. Method according to at least one of claims 17 to 19, **characterised in that**, to allow longitudinal diagonals to be measured, the measuring band (39) is orientated with its longitudinal dimension in the Y direction of the XY system (37) (the circumferential direction).

21. Method according to at least one of claims 17 to 20, **characterised in that**, to allow gutter widths to be measured in the XY system (37), the measuring band (39) is orientated with its longitudinal dimension transverse to, and preferably perpendicular to, the line followed by the gutter.

22. Method according to at least one of claims 17 to 21, **characterised in that**
- the measuring band (39) has a number of measuring lines (39') arranged parallel to one another,
- the measurements obtained with the individual measuring lines (39') are compared with one another, and
- to increase the reliability of measurement, the measurement from a measuring line (39') is only passed on when the measurements which are compared with one another agree.

23. Method according to at least one of claims 17 to 22, **characterised in that**
- the measuring band (39) has a number of measuring lines (39') arranged parallel to one another,
- the measurements obtained with the individual measuring lines (39') are subjected to a process for selecting the extreme values, and
- only the largest or the smallest measurement is passed on.

24. Method according to at least one of claims 17 to 23, **characterised in that**
- the measuring band (39) has a number of measuring lines (39') arranged parallel to one another
- the measurements obtained with the individual measuring lines (39') are added together to determine the size of an area, and
- the total is passed on as a measurement.

25. Method according to at least one of claims 17 to 24, **characterised in that**
- the maximum transverse diagonal or longitudinal diagonal of a test cell (33) is measured by means of the measuring band (39),
- the area of the test cell concerned (33) is calculated from the maximum transverse diagonal or longitudinal diagonal which is measured,
- the area of the test cell concerned (33) is measured by means of the measuring band (39),
- the areas measured and calculated for the cell are compared with one another, and
- the measurement for the maximum transverse diagonal or longitudinal diagonal is passed on only if the areas measured and calculated for the cell agree.

26. Method according to at least one of claims 1 to 25, **characterised in that** the test cell (33) which is to be the reference point (41) is determined automatically in the video image (35).

27. Method according to at least one of claims 1 to 26, **characterised in that**
- the area of the test cell (33) which is selected as the reference point (41) is preset,
- the areas of all the test cells (33) are found in the video image (35) from the items of video data (VD),
- the areas found for the test cells (33) are compared with the preset cell area, and
- that test cell (33) is marked as the reference point (41) whose measured area agrees with the preset area.

## Revendications

1. Procédé pour réaliser et exploiter un échantillon ou une découpe d'échantillon d'une machine à graver électronique pour graver des matrices d'impression, notamment de cylindres d'impression pour l'impression en taille douce, selon lequel
- à partir des données de gravure (GD) qui représentent des valeurs de teintes de consignes à graver entre le niveau « lumière» (blanc) et « profondeur » (noir) et un signal de trame périodique (R) pour générer une trame de gravure, on forme un signal de commande de gravure (GS) pour commander le poinçon de gravure (4) d'un organe de gravure (3),
- le poinçon de gravure (4) grave dans le cylindre d'impression (1), suivant des lignes de gravure, une succession de cuvettes réparties selon une trame de gravure et dont les paramètres géométriques déterminent les valeurs de teintes, réelles, à graver,
- l'organe de gravure (3) effectue un mouvement d'avancée dirigé dans la direction axiale du cylindre d'impression (1) pour la gravure en surface du cylindre d'impression (1),
- on effectue la gravure d'une cuvette échantillon (33), pour une valeur de teinte de consigne prédéterminée, avant le gravage proprement dit de la matrice d'impression (1),
- on réalise une image vidéo (35) de la cuvette échantillon (33) gravée par gravage d'essai,
- on mesure les paramètres géométriques de la cuvette échantillon à graver (33) dans l'image vidéo (35) et on compare les mesures aux paramètres géométriques définissant la valeur de teinte de consigne prédéterminée et
- à partir de la comparaison on déduit des valeurs de réglage à l'aide desquelles on calibre le signal de commande de gravure (GS) pour que les valeurs de teintes réelles à graver correspondent aux valeurs de teintes de consigne à graver,
**caractérisé en ce que**
- dans l'image vidéo (35) prise on sélectionne une cuvette échantillon (33), gravée, pour une valeur de teinte de consigne prédéterminée, comme point de référence (41) dans un système de mesure XY (37) associé à l'image vidéo (35),
- en fonction des paramètres de la trame de gravure on fixe des emplacements de mesure (40) pour mesurer les paramètres géométriques des cuvettes échantillons (33) dans l'image vidéo (35) sous la forme de distances (Δx, Δy) de coordonnées par rapport au point de référence (41) choisi et
- on mesure les paramètres géométriques des cuvettes échantillons (3) au niveau des points de mesure fixés (40) en exploitant l'image vidéo (35).

2. Procédé selon la revendication 1,
**caractérisé en ce que**
lors du gravage d'essais, on grave des cuvettes échantillons (33) pour les valeurs des teintes de consigne « lumière », « profondeur » et au moins pour une « teinte moyenne ».

3. Procédé selon l'une quelconque des revendications 1 ou 2,
**caractérisé en ce qu'**
on grave les cuvettes échantillons (33) pour les valeurs de teintes de consignes « lumière » « profondeur » et « teinte moyenne » chaque fois sur des lignes de gravure voisines (32).

4. Procédé selon au moins l'une quelconque des revendications 1 à 3,
**caractérisé en ce que**
sur chaque ligne de gravure (32) on grave des cuvettes échantillons (33) dans une zone de lignes de gravure.

5. Procédé selon au moins l'une quelconque des revendications 1 à 4,
**caractérisé en ce que**
comme point de référence (41) on sélectionne le centre de la surface d'une cuvette échantillon (33) à graver.

6. Procédé selon au moins l'une quelconque des revendications 1 à 5,
**caractérisé en ce que**
comme point de référence (41) on sélectionne le centre de la surface d'une cuvette échantillon (33) à graver pour la valeur de teinte de consigne « teinte moyenne ».

7. Procédé selon au moins l'une quelconque des revendications 1 à 6,
**caractérisé en ce que**
les paramètres géométriques à mesurer des cuvettes échantillons (33) sont les diagonales, transversales, longitudinales, la profondeur, la largeur de branche ou la surface de cavité des cavités échantillons (33), gravées.

8. Procédé selon au moins l'une quelconque des revendications 1 à 7,
**caractérisé en ce que**
- on subdivise l'image vidéo (35) en pixels (36),
- on réalise un champ de mesure (39) coulissant par-dessus l'image vidéo (35) sur les points de mesure (41) fixés pour mesurer les paramètres géométriques des cuvettes échantillons (33),
- le champ de mesure (39) d'au moins une ligne de mesure (39') comporte un certain nombre de pixels (36) dont les distances représentent des incréments de longueurs,
- on compte le nombre de pixels (36) de la ligne de mesure (39') qui correspond à un chemin de mesure (44) de l'image vidéo (35) et
- on détermine la longueur du chemin de mesure (44) comme multiple des incréments de longueurs.

9. Procédé selon la revendication 8,
**caractérisé en ce qu'**
on définit le chemin de mesure (44) de l'image vidéo (35) par la distance de deux contours (43) appartenant à une cuvette échantillon (33).

10. Procédé selon l'une quelconque des revendications 8 ou 9,
**caractérisé en ce qu'**
on reconnaît le contour (43) des cuvettes échantillons (33) par une exploitation automatique de l'image vidéo (35).

11. Procédé selon l'une quelconque des revendications 8 à 10,
**caractérisé en ce qu'**
on reconnaît les contours (43) des cuvettes échantillons (33) à l'aide d'au moins une ligne de mesures (39') de la bande de mesure (33).

12. Procédé selon l'une quelconque des revendications 8 à 11,
**caractérisé en ce qu'**
- on associe à chaque pixel (36) de l'image vidéo (35) une donnée vidéo (VD) qui indique si le pixel (36) concerné fait partie ou non d'une cuvette échantillon,
- on examine les données vidéo (VD) de deux pixels (36) successifs de la ligne de mesure (39') pour en déterminer une modification et
- on considère qu'une modification constatée des données vidéo (VD) est un contour (43).

13. Procédé selon la revendication 12,
**caractérisé en ce que**
l'examen des données vidéo (VD) pour reconnaître les contours (43) se fait à partir des diagonales transversales et longitudinales en partant du milieu vers les extrémités de la ligne de mesure (39').

14. Procédé selon l'une quelconque des revendications 12 ou 13,
**caractérisé en ce qu'**
on examine les données vidéo (VD) pour reconnaître les contours (43) à l'aide de la profondeur et de la largeur des branches des extrémités vers le milieu de la ligne de mesure (39').

15. Procédé selon l'une quelconque des revendications 8 ou 14,
**caractérisé en ce que**
comme point de mesure (40) on définit le centre d'un champ de mesure (39).

16. Procédé selon l'une quelconque des revendications 8 à 15,
**caractérisé en ce qu'**
on associe un champ de mesure séparé (39) aux cuvettes échantillons (33) pour « lumière » « profondeur » « teinte moyenne ».

17. Procédé selon l'une quelconque des revendications 8 à 16,
**caractérisé en ce que**
- le champ de mesure (39) est réalisé sous la forme d'une bande de mesure en forme de ruban, et
- l'extension longitudinale de la bande de mesure (39) correspond au moins à la distance de deux lignes de gravure (32).

18. Procédé selon la revendication 17,
**caractérisé en ce que**
la bande de mesure (39), au niveau des points de mesure (40), est alignée par son extension longitudinale dans une direction quelconque dans le système XY (37).

19. Procédé selon l'une quelconque des revendications 17 ou 18,
**caractérisé en ce que**
l'extension longitudinale de la bande de mesure (39) est alignée pour mesurer les diagonales transversales et la profondeur dans la direction X du système de mesure XY (37) (direction d'avancée).

20. Procédé selon l'une quelconque des revendications 17 à 19,
**caractérisé en ce que**
l'extension longitudinale de la bande de mesure (39) est alignée dans la direction Y du système de mesure (XY (37) (direction périphérique) pour mesurer les diagonales longitudinales.

21. Procédé selon l'une quelconque des revendications 17 à 20,
**caractérisé en ce que**
l'extension longitudinale de la bande de mesure (39) est alignée transversalement, de préférence perpendiculairement au tracé de la branche pour mesurer les largeurs de branche dans le système XY (37).

22. Procédé selon l'une quelconque des revendications 17 à 21,
**caractérisé en ce que**
- la bande de mesure (39) comporte un certain nombre de lignes de mesure (39') parallèles,
- on compare entre eux les résultats de mesure pour les différentes lignes de mesure (39') et
- on ne transmet le résultat de mesure d'une ligne de mesure (39') pour augmenter la sécurité de mesure qu'en cas de concordance des résultats de mesure comparés entre eux.

23. Procédé selon l'une quelconque des revendications 17 à 22,
**caractérisé en ce que**
- la bande de mesure (39) comporte un certain nombre de lignes de mesure (39') parallèles,
- on soumet les résultats de mesure obtenus à l'aide des différentes lignes de mesure (39') à une sélection de valeur extrême et
- on ne transmet que le plus petit ou le plus grand résultat de mesure.

24. Procédé selon l'une quelconque des revendications 17 à 23,
**caractérisé en ce que**
- la bande de mesure (39) comporte un nombre de lignes de mesure (39') parallèles,
- les résultats de mesure obtenus avec les différentes lignes de mesure (39') sont additionnés pour déterminer la grandeur d'une surface et
- on transmet la somme comme résultat de mesure.

25. Procédé selon l'une quelconque des revendications 17 à 24,
**caractérisé en ce que**
- on mesure la diagonale transversale maximale ou la diagonale longitudinale maximale d'une cuvette échantillon (33) à l'aide de la bande de mesure (39),
- à partir de la diagonale transversale ou de la diagonale longitudinale maximale mesurée on calcule la surface de la cuvette échantillon (33) correspondante,
- à l'aide de la bande de mesure (39) on mesure la surface de la cuvette échantillon (33) concernée,
- on compare entre elles la surface mesurée et la surface calculée de la cuvette et
- on transmet le résultat de la mesure pour la diagonale transversale maximale ou la diagonale longitudinale maximale seulement en cas de concordance des surfaces de cuvettes mesurées et de celles calculées.

26. Procédé selon l'une quelconque des revendications 1 à 25,
**caractérisé en ce qu'**
on détermine automatiquement dans l'image vidéo (35) la cuvette échantillon (33) qui constitue le point de référence (41).

27. Procédé selon l'une quelconque des revendications 1 à 26,
**caractérisé en ce qu'**
- on prédétermine la surface de cuvette de la cuvette échantillon (33) sélectionnée comme point de référence (41),
- on détermine dans l'image vidéo (35), la surface de toutes les cuvettes échantillons (33) à l'aide des données vidéo (VD),
- on compare les surfaces constatées des cuvettes échantillons (33) à la surface de cuvette prédéterminée et
- on marque comme point de référence (41), la cuvette échantillon (33) dont la surface mesurée correspond à la surface de cuvette prédéterminée.
